(19) **Europäisches Patentamt / European Patent Office / Office européen des brevets**

(11) **EP 1 497 702 B1**

(12) **FASCICULE DE BREVET EUROPEEN**

(45) Date de publication et mention
de la délivrance du brevet:
**04.06.2008 Bulletin 2008/23**

(51) Int Cl.:
*G05B 19/42* *(2006.01)*  *E05F 15/10* *(2006.01)*
*E06B 9/90* *(2006.01)*

(21) Numéro de dépôt: **03708395.3**

(22) Date de dépôt: **25.03.2003**

(86) Numéro de dépôt international:
**PCT/IB2003/001083**

(87) Numéro de publication internationale:
**WO 2003/081357 (02.10.2003 Gazette 2003/40)**

(54) **PROCEDE DE DETERMINATION D'UNE POSITION AJOUREE D'UN VOLET ROULANT**

VERFAHREN ZUR ERMITTLUNG EINER DURCHBRECHENDEN LAGE EINES ROLL-LADENS

METHOD OF DETERMINING AN OPEN POSITION FOR A ROLLER BLIND

(84) Etats contractants désignés:
**AT BE BG CH CY CZ DE DK EE ES FI FR GB GR HU IE IT LI LU MC NL PT RO SE SI SK TR**

(30) Priorité: **25.03.2002  FR 0203668**
**12.02.2003  FR 0301675**

(43) Date de publication de la demande:
**19.01.2005  Bulletin 2005/03**

(73) Titulaire: **Somfy SAS**
**74300 Cluses (FR)**

(72) Inventeurs:
• **MAISTRE, Valérie**
**F-74300 THYEZ (FR)**

• **DESBIOLLES, Claude**
**F-74800 ETEAUX (FR)**
• **HUBAULT, Alain**
**F-74300 Magland (FR)**
• **MERCIER, Patrick**
**F-74970 MARIGNIER (FR)**

(74) Mandataire: **Bugnion Genève**
**Bugnion S.A.**
**Conseils en Propriété Industrielle**
**Case Postale 375**
**1211 Genève 12 (CH)**

(56) Documents cités:
**EP-A- 0 426 577      EP-A- 0 574 637**
**EP-A- 0 784 146      EP-A- 0 967 360**

## Description

L'invention se rapporte à un procédé selon le préambule de la revendication indépendante 1. Il concerne encore un dispositif de commande définit par le préambule de la revendication 6.

Il est connu dans les dispositifs de commande de volets roulants de déterminer une position intermédiaire du volet roulant, dite ajourée, qui peut être enregistrée par l'installateur ou l'utilisateur.

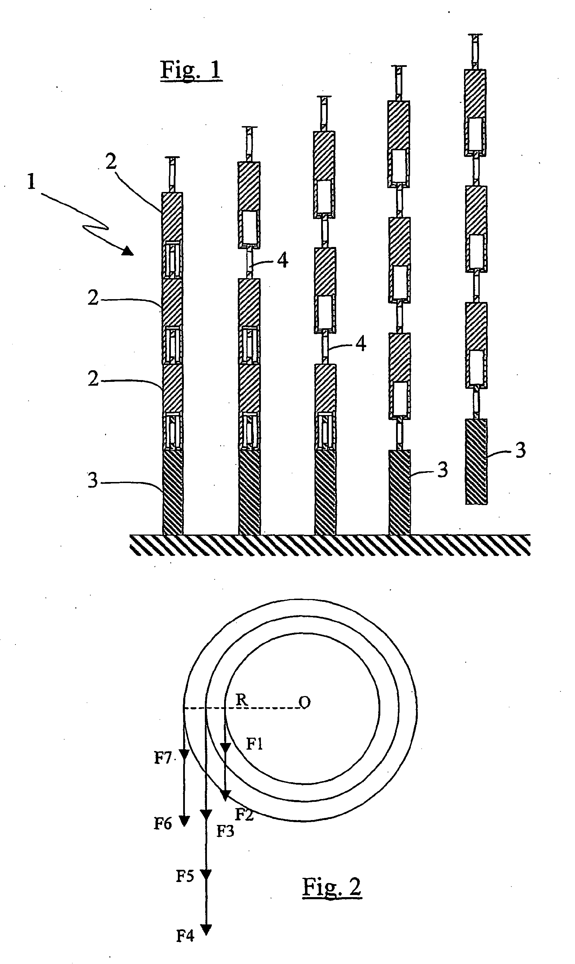

Dans le cas d'un volet roulant à lames ajourées, la position ajourée est telle que le tablier du volet est globalement déployé, les lames restant écartées les unes des autres. Dans cette position écartée des lames, deviennent alors apparents des trous oblongs, ménagés dans le sommet de chaque lame et normalement cachés dès que les lames reposent les unes sur les autres, comme représenté en figure 1. Une telle situation permet d'assurer l'intimité dans la pièce, vis-à-vis de l'extérieur et de fournir une lumière atténuée, tout en permettant la ventilation si les fenêtres restent entrouvertes.

Cette position correspond typiquement à 80-90% du déplacement du tambour d'enroulement du volet nécessaire à la fermeture du volet. Cependant, cette position dépend très fortement de la nature des lames de volet roulant utilisées dans la constitution du tablier.

Le brevet EP 0 426 577 décrit précisément des moyens permettant d'enregistrer une position intermédiaire et d'exécuter un ordre destiné à amener un dispositif dans une telle position. Dans ce brevet, un capteur permet de repérer la position du tube d'enroulement entraîné par l'actionneur. Dans tous les cas, c'est à l'installateur ou à l'utilisateur de procéder au premier enregistrement d'une position intermédiaire. Cet enregistrement est réalisé à l'aide du moyen de commutation comportant des touches de commande.

Le brevet EP 0 574 637 décrit des modes d'enregistrement et d'exécution de commande permettant d'atteindre une position intermédiaire relatifs à un actionneur sans capteur de position. C'est alors la durée de manoeuvre qui est prise en considération. Une position intermédiaire s'exprime donc en pourcentage de la course totale entre les deux positions extrêmes.

Les dispositifs décrits présentent un inconvénient. En effet, la position intermédiaire de confort doit obligatoirement être réglée soit par l'installateur, soit par l'utilisateur. Et, si ce réglage n'est pas fait l'utilisateur risque d'ignorer l'existence de cette fonction d'ouverture en position intermédiaire.

Dans la demande FR 02 03668, il a été imaginé de réaliser des dispositifs comportant une position intermédiaire prédéfinie par le constructeur. Dans le cas d'un fabricant de volets roulants connaissant le type de lame de chaque dispositif, il est possible de déterminer une telle information de position intermédiaire, par exemple par le biais d'une valeur de pourcentage de la course totale. L'intérêt principal de cet enregistrement préalable d'une valeur prédéfinie est de permettre à l'installateur de présenter la fonction à son client, en laissant à ce dernier le soin d'un ajustement précis à sa convenance. Il n'est alors pas nécessaire que la position intermédiaire corresponde à la position ajourée optimale.

Cette solution présente un inconvénient. Elle complique la fabrication. En effet, on doit déterminer le type de lame du volet roulant puis enregistrer cette donnée de position intermédiaire.

Le document EP 0 007 360 décrit un procédé pour détecter une transition entre deux positions d'un volet roulant autour d'une position de ce volet roulant dans laquelle les éléments ajourés sont tous visibles afin de déterminer si le volet roulant est dans une phase d'enroulement ou de déroulement.

Le but de l'invention est de fournir un procédé de détermination d'une position intermédiaire ajourée améliorant les procédés connus de l'art antérieur et palliant les inconvénients précités. En particulier, l'invention propose un procédé de détermination automatique de la position intermédiaire ajourée optimale, évitant toute étape d'enregistrement chez le fabricant.

Le procédé selon l'invention est caractérisé par la partie caractérisante de la revendication 1.

Des variantes d'exécution du procédé sont définies par les revendications dépendantes 2 à 5.

Dans ce procédé, l'ajout d'une valeur doit être compris comme l'ajout d'une valeur relative pouvant éventuellement correspondre à la soustraction d'une valeur positive.

Le dispositif de commande est caractérisé par la partie caractérisante de la revendication 6.

Une variante de ce dispositif de commande est défini par la revendication 7.

Le dessin annexé représente, à titre d'exemple, un mode d'exécution du procédé selon l'invention.

La figure 1 est un schéma d'une séquence de levage d'un volet roulant depuis sa position fermée.

La figure 2 est une vue schématique en coupe du tambour d'enroulement d'un volet roulant et des différentes actions mécaniques qui s'y appliquent.

Les figures 3 et 4 sont des diagrammes représentant le couple résistant à l'entraînement du volet en fonction de la position angulaire du tambour d'enroulement ou du temps.

La figure 5 est un schéma d'un dispositif de commande permettant la mise en oeuvre du procédé selon l'invention.

La figure 6 est un ordinogramme illustrant le procédé selon l'invention.

La figure 7 est un ordinogramme de détermination de la position intermédiaire ajourée.

La figure 8 est un ordinogramme illustrant le fonctionnement d'une touche permettant de commander la mise en position intermédiaire ajourée.

Le volet roulant 1 représenté à la figure 1 est composé de plusieurs lames 2, 3 reliées les unes aux autres. Une séquence de levage de ce volet roulant 1 est représentée de gauche à droite depuis sa position fermée. Dans cette première position, les lames 2, 3 reposent les unes sur les autres. Le couple qu'exerce le volet sur son tambour d'enroulement, non représenté, est donc nul.

Sur les trois clichés suivants, les lames inférieures sont entraînées par les lames supérieures. Ceci permet de découvrir des trous oblongs pratiqués dans les parties 4 des lames destinées à les relier entre elles. Enfin, sur le cliché de droite, la lame inférieure 3 a quitté sa position basse, si bien que les trous oblongs sont découverts entre toutes les lames 2, 3.

Dans cette position, le poids du volet roulant suspendu au tambour d'enroulement est maximal. Cependant, le couple exerce sur le tambour n'est pas forcément maximal. En effet, le couple exercé sur le tambour d'enroulement dépend aussi du rayon d'enroulement.

Comme représenté de manière simplifiée à la figure 2, la masse suspendue augmente, ce qui provoque un effort croissant appliqué sur le petit rayon : F1 puis F2. Pour une vitesse angulaire constante du tambour d'enroulement, le couple augmente de manière sensiblement linéaire et rapide. En effet, il suffit de parcourir la hauteur d'un ajour pour entraîner la lame suivante et donc augmenter la masse suspendue.

Quand la masse suspendue correspond à un poids F3, on suppose qu'un tour entier d'enroulement a été réalisé : on passe alors sur le deuxième diamètre d'enroulement. Du fait de ce nouveau diamètre d'enroulement, la variation de couple due au décollage d'une lame est plus importante.

Dès que la lame inférieure décolle, la masse suspendue passe par un maximum. On a représenté par F4 la nouvelle valeur du poids du tablier suspendu. Ce poids diminue ensuite au fur et à mesure de l'enroulement: F5, puis F6 et F7 sur un diamètre supérieur.

On remarque que, jusqu'à ce que la dernière lame ait décollé, la vitesse moyenne de diminution de la masse suspendue (due à l'enroulement des lames autour du tambour) est en général inférieure à la vitesse moyenne de croissance de la masse suspendue (due à l'entraînement de nouvelles lames inférieures). En effet, il faut enrouler une lame complète pour provoquer la diminution d'une unité de la masse suspendue, alors qu'il suffit d'enrouler une distance correspondant a un ajour (soit ici environ 3 fois moins) pour provoquer l'augmentation d'une unité.

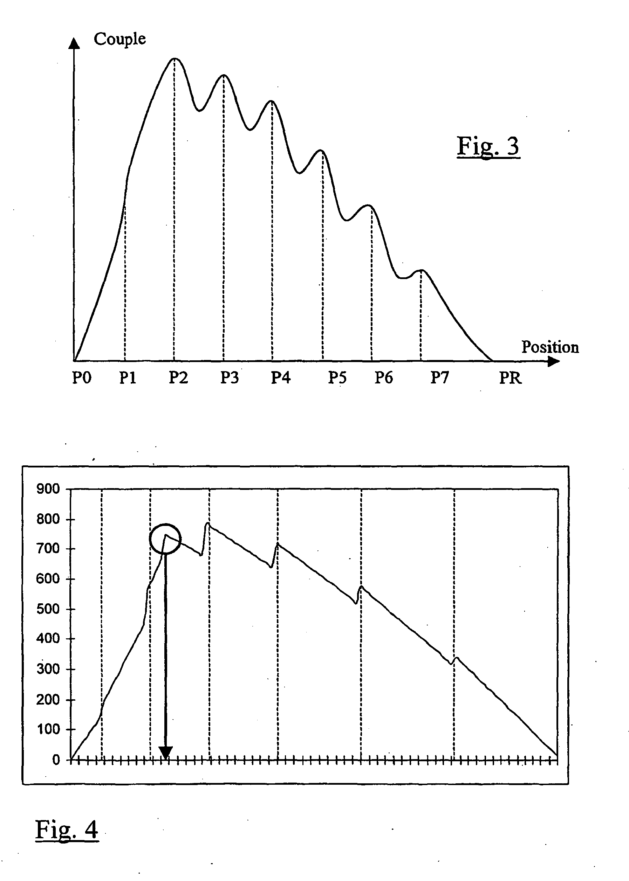

La courbe de la figure 3 est un exemple typique d'un relevé de couple en fonction du positionnement angulaire du tambour d'enroulement, dans le cas où la lame inférieure n'est pas lestée. Une telle courbe peut être obtenue à l'aide d'un capteur de couple et d'un capteur de position angulaire. Un relevé expérimental est nettement plus bruité, mais l'usage d'un algorithme de filtrage numérique permet de s'affranchir des fluctuations de couple.

Dans le cas représenté à la figure 3, le volet s'enroule sur 8 tours. La lame inférieure décolle ici à la fin du deuxième tour P2. Dans la partie globalement décroissante du couple, chaque nouveau tour est clairement repérable par un saut de couple (P3 à P7) s'opposant à la décroissance générale. Dans la partie croissante, correspondant à la mise en ajours progressive des lames, le saut de couple correspondant au début du deuxième tour P1 est plus difficile à identifier. On remarque cependant qu'il est facile, à partir de la périodicité mesurée entre les positions P3 à P7, de repérer par extrapolation les positions P1 et P2 dans le cas où ceux-ci seraient peu marqués.

La situation se complique quelque peu lorsque, comme c'est souvent le cas, la lame inférieure est lestée. Le maximum de couple ne correspond pas forcément au décollage de la lame inférieure, mais peut se produire un peu après, au moment d'un passage à un diamètre d'enroulement supérieur. C'est ce qui est illustré à la figure 4, qui correspond cette fois à une simulation du couple exercé par le volet sur le tambour en fonction de la longueur de tablier enroulée. Le maximum intermédiaire se distingue alors très facilement, repéré par une flèche. Il s'agit de la variation de couple due au décollage de la lame inférieure, celle-ci étant lestée. Il n'y a donc aucune ambiguïté sur le repérage de la lame inférieure, pourvu qu'elle soit lestée.

La position intermédiaire ajourée PIA est déduite de la position de lame finale PLF dans laquelle la lame inférieure est en limite de contact avec une butée basse. Cette position intermédiaire ajourée correspond en effet à un enroulement légèrement inférieur à celui de la position PLF.

Ainsi, une donnée DPIA définissant la position PIA peut être déduite d'une donnée dPLF définissant la position PLF par la relation

$$dPIA = dPLF - 20,$$

si les données sont des angles d'enroulement du tambour en degrés et si la position PIA se trouve 20° avant la position PLF.

On peut également lier les données définissant les deux positions par un coefficient de proportionnalité, par exemple:

$$dPIA = 0.95 \times dPLF.$$

Si la détection de couple est très sensible, ou si aucune marge n'est prise, on peut, pour simplifier, prendre :

$$dPIA = dPLF.$$

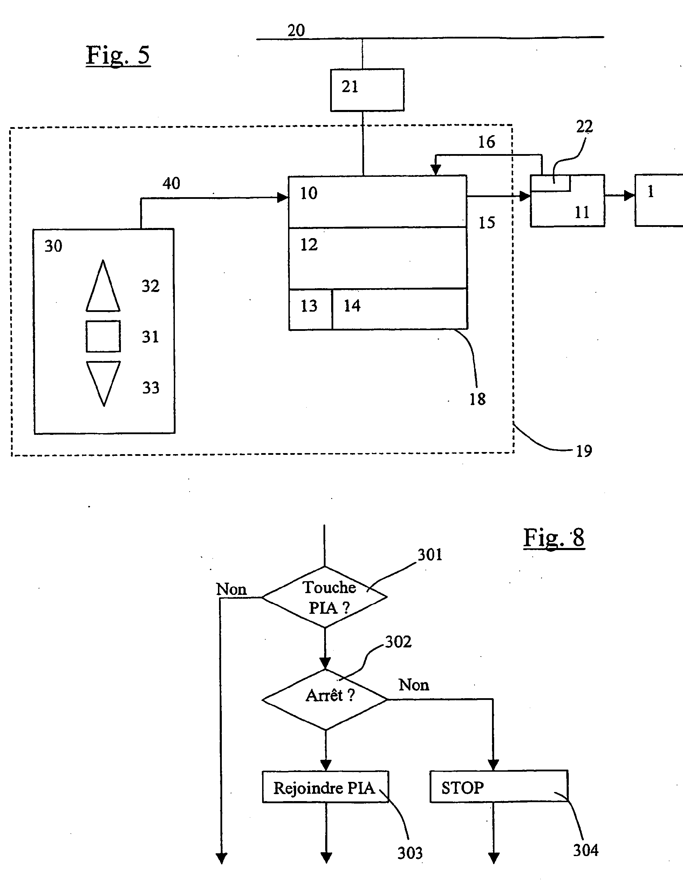

Le dispositif de commande 19 représenté à la figure 5 et permettant de mettre en oeuvre le procédé selon l'invention comprend une unité de commande 18 comprenant un microprocesseur 10 permettant l'exécution de programmes contenus dans une mémoire 12. L'unité de commande 18 pilote un actionneur 11 entraînant le volet roulant 1. Connu de l'homme de métier, le détail des connexions électriques et des relais de puissance n'est pas représenté. On signale par la flèche 15 la faculté de l'unité de commande 18 d'agir sur l'actionneur 11 et par la flèche 16 des informations de retour telles que celles d'un capteur de couple 22 dans l'actionneur et, éventuellement, d'un capteur de position angulaire du tube d'enroulement. Le capteur de couple permettant la mesure du couple est de préférence situé dans l'actionneur 11, mais peut aussi être situé à un autre endroit dans la chaîne de transmission entre l'actionneur et le volet. Une zone mémoire 13 est affectée au stockage de la donnée de position intermédiaire ajourée DPIA et une zone mémoire 14 est affectée au stockage d'un algorithme d'initialisation comprenant un programme d'acquisition de mesures de couple et de positions et un programme de calcul de la donnée de position intermédiaire ajourée DPIA.

Le dispositif de commande 19 est alimenté à partir d'une source électrique 20 à l'aide d'un convertisseur 21. Par ailleurs, un émetteur d'ordres 30 comprend des moyens de commande représentés ici par trois touches 31, 32 et 33. La touche 31 active un contact donnant l'ordre de se rendre en position intermédiaire ajourée. La touche 32 active un contact donnant un ordre de montée et la touche 33 active un contact donnant un ordre de descente.

Comme il est connu de l'état de la technique, un appui sur une combinaison de ces touches ou un appui prolongé sur l'une d'entre elles, permet de faire entrer l'émetteur d'ordres dans un mode d'apprentissage.

L'émetteur d'ordres est relié à l'unité de commande par une liaison filaire 40 ou sans fil (infra-rouge, radio, etc...) comme il est connu de l'état de la technique. Cette liaison peut être bidirectionnelle, l'émetteur d'ordres comportant des voyants ou un écran permettant d'accuser réception des ordres émis. L'émetteur d'ordres peut être séparé de l'actionneur ou intégré dans un même ensemble mécanique.

Un appui sur la touche 31 provoque l'activation de l'actionneur 11 jusqu'à ce que le volet atteigne la position intermédiaire ajourée qui est calculée par un algorithme d'initialisation stocké en mémoire 14.

Un intérêt de l'invention est de permettre une démonstration instantanée de la fonction de mise en position intermédiaire ajourée, même si le réglage n'est pas exactement celui désiré par l'utilisateur. En effet, l'utilisateur ayant compris l'effet d'un appui sur la touche de position intermédiaire ajourée, il sera enclin à utiliser cette fonction après l'avoir éventuellement réglée à sa convenance.

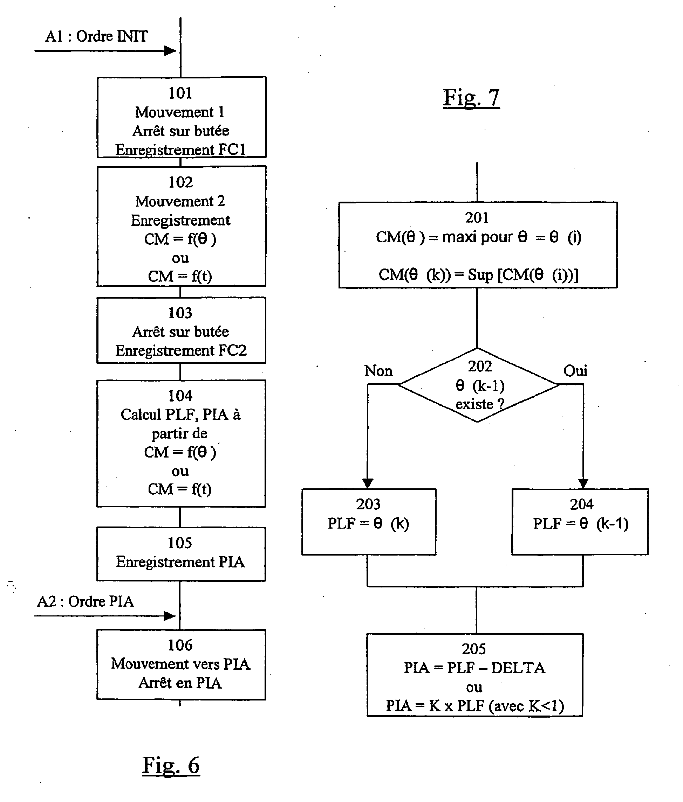

Comme représenté à la figure 6, suite à une action A1 de l'installateur, ordonnant l'entrée en mode apprentissage, le volet engage, dans une première phase 101, un premier mouvement, par exemple de descente, jusqu'à rencontrer une butée basse. Celle-ci est détectée par le dispositif de mesure de couple, qui provoque l'arrêt de l'actionneur et l'enregistrement d'une première position de fin de course FC1 ou la remise à zéro d'un compteur de temps si le dispositif n'est pas muni de capteur angulaire de position.

Aussitôt après, dans une phase 102, l'actionneur 11 entraîne le volet dans la direction opposée. Le capteur de couple recueille les valeurs du couple CM exercé sur le tambour, donc sur l'actionneur 11, en fonction de la position d'enroulement ou du temps. Cette phase d'enregistrement dure, par exemple, jusqu'à une phase 103 dans laquelle un arrêt sur butée est détecté. Le signal issu du capteur de couple est filtré à l'aide d'un filtre passe-bas dont la fréquence de coupure est, de préférence, au moins égale à la fréquence de rotation du tambour d'enroulement de manière à éviter d'obtenir une courbe de couple présentant de nombreux extremum locaux. Dans cette phase, on enregistre également une deuxième position de fin de course FC2.

Dans une phase suivante 104, on calcule les données dPLF et dPIA servant à définir les positions PLF et PIA, comme expliqué par la suite.

Dans une phase 105, la position intermédiaire ajourée est enregistrée dans la mémoire 13. A l'issue de cette phase, le dispositif de commande sort du mode d'apprentissage.

Suite à une action A2 de l'utilisateur sur la touche 31 de l'émetteur d'ordres 30, l'unité de commande 18 reçoit l'ordre d'amener le volet dans la position intermédiaire ajourée. Dans une phase 106, l'unité de commande 18 détermine le sens du mouvement et active l'actionneur 11 jusqu'à atteindre la position PIA.

Dans le cas où le temps d'activation de l'actionneur sert à déterminer la position du volet, le positionnement du volet dans la position PIA peut nécessiter un passage préalable par une butée FC1 ou FC2 afin de remettre à zéro le compteur de temps.

On peut également utiliser ce procédé dans le cas où le volet roulant ou tout autre dispositif de fermeture, d'occultation ou de protection solaire n'est pas muni de butée haute. Les positions de fin de course FC1 et/ou FC2 peuvent être déterminées par l'installateur à l'aide de l'émetteur et de moyens de programmation connus de l'état de la technique. Pour simplifier le traitement des données, il est préférable que le mouvement entre les positions FC1 et FC2 soit ininterrompu, mais comme décrit par la suite, il n'est pas indispensable pour l'invention que le mouvement ait lieu d'une butée de fin de course à l'autre, pourvu qu'on enregistre les variations du couple au voisinage de la position dans laquelle la lame inférieure est en limite de contact avec la butée basse au moins de part et d'autre de cette position.

L'ordinogramme de la figure 7 illustre le procédé de détermination des positions PLF et PIA, mis en oeuvre dans la phase 104 du procédé précédemment décrit.

Dans une première sous-phase 201, on recherche en mémoire l'ensemble des maxima locaux CM(i) du couple CM exercé sur le tambour lors de la phase 102 et les positions θ(i) du volet correspondantes.

On détermine par comparaison des maxima, le plus élevé d'entre eux CM(k) et sa position θ(k).

Il est clair qu'il n'est pas indispensable de connaître la position de tous les maxima, mais on remarque que ces informations! permettent de déduire la fréquence d'enroulement, sensiblement constante ou variant avec la charge de manière connue et d'utiliser cette donnée pour éventuellement discriminer un maximum dû à la variation du diamètre d'enroulement, d'un maximum dû à la levée de la lame inférieure lestée, dans le cas où ceux-ci seraient très proches.

Dans le cas de maxima bien délimités, une discrimination simple suffit. Celle-ci peut être réalisée par un test 202 dans lequel on détermine s'il existe un maximum local dont la position est plus proche de la position fermée du volet que ne l'est la position du maximum global. L'indice (k-1) est attribué à la position d'un maximum local situé entre la position fermée du volet et la position du couple maximum global.

Si le résultat de ce test est négatif alors on définit, dans une sous-phase 203, la position PLF dans laquelle la lame inférieure est en limite de contact avec la butée basse comme étant la position θ(k) du couple maximum global.

Si le résultat de ce test est positif alors on définit, dans une sous-phase 204, la position PLF dans laquelle la lame inférieure est en limite de contact avec la butée basse comme étant la position θ(k-1) du maximum local existant entre la position fermée du volet et la position θ(k) du couple maximum global.

Enfin, dans une sous-phase 205, on définit la position intermédiaire ajourée PIA à partir de la position PLF dans laquelle la lame inférieure est en limite de contact avec la butée basse. Cette définition peut consister en la soustraction d'un nombre ou encore en l'application d'un coefficient multiplicateur à la donnée dPLF définissant la position PLF. Les données définissant les positions PIA et PLF peuvent être des angles d'enroulement du tambour, des durées d'activation de l'actionneur 11 depuis une position de référence ou encore des images de ces grandeurs.

Enfin, l'utilisateur ou l'installateur conserve, comme connu de l'art antérieur, la possibilité d'enregistrer une donnée de position définissant une position personnalisée convenant mieux à l'utilisateur. Cet enregistrement agit, de manière préférée, directement par écrasement de la valeur calculée PIA dans la mémoire 13.

L'invention est plus facilement mise en oeuvre par l'utilisation d'un émetteur d'ordres comportant un nombre réduit de touches et facilitant la compréhension des fonctions. A cet effet, l'invention propose que le dispositif précédent soit mis en oeuvre avec un émetteur d'ordre présentant un clavier à trois touches. La touche 31 ayant une fonction de commande d'aller en position intermédiaire ajourée, lorsque l'actionneur 11 n'est pas activé et de commande d'arrêt, lorsque l'actionneur 11 est activé.

Comme représenté à la figure 8, une première étape 301 teste l'état de la touche 31. Si celle-ci est actionnée, une seconde étape 302, teste si l'actionneur est activé :

- si tel est le cas, on passe à une étape 304 dans laquelle l'actionneur 11 est désactivé,
- si tel n'est pas le cas, on passe à une étape 303 dans laquelle l'émetteur d'ordres envoie un ordre commandant au volet de rejoindre la position intermédiaire ajourée PIA.

Ainsi donc, l'invention facilite doublement l'usage de la fonction d'accès à une position intermédiaire ajourée, d'une part, par un procédé qui rend cette fonction utilisable, de manière presque optimale, sans recours à un réglage sur site et, d'autre part, par des moyens d'émission d'ordres adaptés à une bonne compréhension des fonctions par l'utilisation d'un nombre de touches limité.

**Revendications**

1. Procédé de détermination d'une position intermédiaire ajourée (PIA) dans un système de commande d'un actionneur (11) permettant le déplacement d'un dispositif (1) de protection solaire, d'occultation ou de fermeture, comprenant des lames empilables (2, 3), reliées entre elles par des parties ajourées (4), **caractérisé en ce qu**'il comprend les étapes suivantes :

    - repérer, par analyse du couple exercé sur l'actionneur (11), la position de lame finale (PLF) dans laquelle la lame inférieure (3) est en limite de contact avec la butée basse du dispositif (1),
    - attribuer à cette position de lame finale (PLF) une donnée (dPLF) la définissant,
    - calculer une donnée de position intermédiaire ajourée (dPIA) définissant la position intermédiaire ajourée (PIA) à partir de la donnée (dPLF) de position de lame finale (PLF),
    - enregistrer la donnée de position intermédiaire ajourée (dPIA) dans une mémoire (13) de position intermédiaire ajourée.

**2.** Procédé selon la revendication 1, **caractérisé en ce que** l'étape « repérer, par analyse du couple exercé sur l'actionneur (11), la position de lame finale (PLF) dans laquelle la lame inférieure (3) est en limite de contact avec la butée basse du dispositif (1)» comprend les sous-étapes suivantes :

- entraîner le dispositif (1) grâce à l'actionneur (11) au moins au voisinage de la position de lame finale (PLF), en passant par cette position (PLF),
- enregistrer pendant la sous-étape précédente les valeurs du couple exercé sur l'actionneur (11) par le poids du dispositif (1) en fonction de la position du dispositif (1),
- déterminer la position de lame finale (PLF) comme correspondant au premier maximum local de couple rencontré depuis la position complètement déroulée du dispositif (1).

**3.** Procédé de commande d'un actionneur (11) permettant le déplacement d'un dispositif de protection solaire, d'occultation ou de fermeture (1) dans une position intermédiaire ajourée (PIA), comprenant les. étapes du procédé selon la revendication 1 ou 2, **caractérisé en ce qu'**il comprend l'étape suivante :

- activer l'actionneur (11) lors de l'émission d'un ordre de commande de position intermédiaire ajourée, jusqu'à ce que le dispositif (1) occupe la position définie par la donnée de position intermédiaire ajourée (dPIA) enregistrée dans la mémoire (13) de position intermédiaire ajourée.

**4.** Procédé selon l'une des revendications 1 à 3, **caractérisé en ce que** la donnée définissant la position intermédiaire ajourée (PIA) est déduite d'une donnée définissant la position de lame finale (PLF) par multiplication d'un coefficient.

**5.** Procédé selon l'une des revendications 1 à 3, **caractérisé en ce que** la donnée définissant la position intermédiaire ajourée (PIA) est déduite d'une donnée définissant la position de lame finale (PLF) par ajout d'une valeur.

**6.** Dispositif de commande (19) d'un actionneur (11) permettant le déplacement d'un dispositif (1) de protection solaire, d'occultation ou de fermeture, comprenant des lames empilables (2, 3), reliées entre elles par des parties ajourées (4) et comprenant un capteur de couple (22), **caractérisé en ce qu'**il comprend des moyens de calcul (10) d'une donnée (dPIA) définissant une position (PIA) dans laquelle toutes les parties ajourées (4) sont visibles et déduite d'une donnée (dPLF) définissant la position (PLF) dans laquelle la lame inférieure est en limite de contact avec une butée basse.

**7.** Dispositif selon la revendication 6, **caractérisé en ce qu'**il comprend un émetteur d'ordres (30) présentant une touche (31) de position intermédiaire ajourée activant un contact commandant à l'actionneur (11) d'amener le dispositif (1) de protection solaire, d'occultation ou de fermeture en position intermédiaire ajourée (PIA) si l'actionneur (11) n'est pas activé et commandant l'arrêt de l'actionneur (11) s'il est activé.

**Claims**

**1.** A method of determining a shading and ventilation position (PIA) in a control system of an actuator (11) which is used to move a sun-protection, privacy or closure device (1) comprising stackable slats (2, 3) connected together by perforated parts (4), **characterized in that** it comprises the following steps :

- identifying, by analyzing the torque exerted on the actuator (11), the final slat position (PLF) in which the bottom slat (3) is at the limit of contact with the bottom end stop of the device (1),
- assigning to this final slat position (PLF) a data (dPLF) defining said position,
- calculating a shading and ventilation position data (dPIA) defining the shading and ventilation position (PIA) from the data (dPLF) of the final slat position (PLF), and
- storing the shading and ventilation position data (dPIA) in a shading and ventilation position memory (13).

**2.** The method as claimed in claim 1, **characterized in that** the step of "identifying, by analyzing the torque exerted on the actuator (11), the final slat position (PLF) in which the bottom slat (3) is at the limit of contact with the bottom end stop of the device (1)" comprises the following sub-steps :

- by means of the actuator (11), driving the device (1) at least to the vicinity of the final slat position (PLF), such that it passes through this position (PLF),
- storing, during the preceding sub-step, the values of the torque exerted on the actuator (11) by the weight of the device (1), based on the position of the device (1), and
- determining the final slat position (PLF) as corresponding to the first local torque maximum encountered after leaving the completely unwound position of the device (1).

**3.** A method for controlling an actuator (11) making it possible to move a sun-protection, privacy or closing device (1) to a shading and ventilation position (PIA), that includes the steps of the method as claimed in claim 1 or 2, **characterized in that** it includes the following steps:

- activating the actuator (11) at the time of the transmission of a shading and ventilation position control command, until the device (1) occupies the position defined by the shading and ventilation position data (dPIA) stored in the shading and ventilation position memory (13).

**4.** The method as claimed in one of claims 1 to 3, **characterized in that** the data defining the shading and ventilation position (PIA) is derived from a data defining the final slat position (PLF) by multiplying it by a coefficient.

**5.** The method as claimed in one of claims 1 to 3, **characterized in that** the data defining the shading and ventilation position (PIA) is derived from a data defining the final slat position (PLF) by the addition of a value.

**6.** A device (19) for controlling an actuator (11) for moving a sun-protection, privacy or closure device (1) comprising stackable slats (2, 3) connected together by perforated parts (4) and comprising a torque sensor (22), **characterized in that** it comprises means (10) for calculating a data (dPIA) defining a position (PIA) in which all the perforated parts (4) are visible and derived from a data (dPLF) defining the position (PLF) in which the bottom slat is at the limit of contact with a bottom end stop.

**7.** The device as claimed in claim 6, **characterized in that** it comprises a command transmitter (30) having a shading and ventilation position key (31) activating a contact that causes the actuator (11) to move the sun-protection, privacy or closure device (1) to the shading and ventilation position (PIA) if the actuator (11) is not activated and that causes the actuator (11) to stop if it is activated.

**Patentansprüche**

**1.** Verfahren zur Ermittlung einer lichtdurchlässigen Stellung (PIA) in einem Steuersystem einer Antriebsvorrichtung (11), welche die Bewegung einer Vorrichtung (1) zum Sonnenschutz, zur Abdunklung oder zum Verschliessen ermöglicht, mit stapelbaren Stäben (2, 3), die über Glieder mit Lichtschlitzen (4) miteinander verbunden sind, **dadurch gekennzeichnet, dass** es folgende Schritte aufweist:

- Ermittlung der Endstellung des untersten Stabs (PLF), bei der sich der unterste Stab (3) in seinem Endkontakt am unteren Endanschlag der Vorrichtung (1) befindet, durch Analyse des auf den Antrieb (11) ausgeübten Moments,
- Zuteilung eines Datenelements (dPLF) an diese Endstellung des Stabes (PLF),
- Berechnung eines Datenelements der lichtdurchlässigen Zwischenstellung (dPIA), welche die lichtdurchlässige Zwischenstellung (PIA) definiert, ausgehend vom Datenelement (dPLF) der Endstellung des Stabes (PLF),
- Speicherung des Datenelements der lichtdurchlässigen Zwischenstellung (dPIA) in einem Speicher (13) der lichtdurchlässigen Zwischenstellung.

**2.** Verfahren nach Anspruch 1, **dadurch gekennzeichnet, dass** der Schritt "Ermittlung der Endstellung des untersten Stabs (PLF), bei der sich der unterste Stab (3) in seinem Endkontakt am unteren Endanschlag der Vorrichtung (1) befindet, durch Analyse des auf den Antrieb (11) ausgeübten Moments" die folgenden Einzelschritte umfasst:

- Verschiebung der Vorrichtung (1) mit Hilfe des Antriebs (11) mindestens in die Nähe der Endstellung des Stabes (PLF), wobei diese Stellung (PLF) überfahren wird,
- Speicherung der Werte des Moments, welches im Verlauf des vorhergehenden Einzelschritts in Abhängigkeit von der jeweiligen Stellung der Vorrichtung (1) vom Gewicht der Vorrichtung (1) auf den Antrieb (11) ausgeübt wird,
- Bestimmung der Endstellung des untersten Stabes (PLF) als eine Stellung, die dem ersten örtlichen Höchstwert des Moments entspricht, ausgehend von derjenigen Position, an der die Vorrichtung (1) vollständig abgerollt ist.

**3.** Verfahren zur Steuerung einer Antriebsvorrichtung (11), welche die Verschiebung einer Vorrichtung (1) zum Sonnenschutz, zur Abdunklung oder zum Verschliessen in eine lichtdurchlässige Zwischenstellung (PIA) ermöglicht und die Schritte gemäss Anspruch 1 oder 2 umfasst, **dadurch gekennzeichnet, dass** es den folgenden Schritt aufweist:

- Aktivierung der Antriebsvorrichtung (11) bei Ausgabe eines Steuerbefehls über die lichtdurchlässige Zwischenstellung, bis die Vorrichtung (1) die Position einnimmt, welche durch das Datenelement der lichtdurchlässigen Zwischenstellung (dPIA) definiert und im Speicher der lichtdurchlässigen Zwischenstellung (13) abgelegt ist.

**4.** Verfahren nach einem der Ansprüche 1 bis 3, **dadurch gekennzeichnet, dass** das Datenelement, welches die lichtdurchlässige Zwischenstellung (PIA) definiert, von einem Datenelement abgeleitet wird, welches die Endstellung des untersten Stabs (PLF) definiert, und zwar durch Multiplikation mit einem Koeffizienten.

5. Verfahren nach einem der Ansprüche 1 bis 3, **dadurch gekennzeichnet, dass** das Datenelement, welches die lichtdurchlässige Zwischenstellung (PIA) definiert, von einem Datenelement abgeleitet wird, welches die Endstellung des untersten Stabs (PLF) definiert, und zwar durch Zufügung eines Wertes.

6. Vorrichtung (19) zur Steuerung einer Antriebsvorrichtung (11) zur Bewegung einer Vorrichtung (1) zum Sonnenschutz, zur Abdunklung oder zum Verschliessen, mit stapelbaren, über lichtdurchlässige Glieder (4) miteinander verbunden Stäben (2, 3), und mit einem Momentfühler (22), **dadurch gekennzeichnet, dass** die Vorrichtung Berechnungsmittel (10) eines Datenelements (dPIA) aufweist, welches eine Stellung (PIA) definiert, in der sämtliche lichtdurchlässigen Bereiche (4) sichtbar sind, und welches von einem Datenelement (dPLF) abgeleitet ist, das die Stellung (PLF) definiert, bei der sich der unterste Stab im Endkontakt mit einem unteren Endanschlag befindet.

7. Vorrichtung nach Anspruch 6, **dadurch gekennzeichnet, dass** sie einen Befehlssender (30) aufweist, der eine Taste (31) einer lichtdurchlässigen Zwischenstellung aufweist, welche einen Kontakt aktiviert, der die Antriebsvorrichtung (11) dazu veranlasst, die Vorrichtung (1) zum Sonnenschutz, zur Abdunklung oder zum Verschliessen in eine lichtdurchlässige Zwischenstellung (PIA) zu bringen, wenn die Antriebsvorrichtung (11) nicht in Tätigkeit ist, und der das Anhalten der Antriebsvorrichtung (11) veranlasst, wenn diese aktiviert ist.

## Fig. 1

## Fig. 2

Couple

Fig. 3

P0   P1   P2   P3   P4   P5   P6   P7   PR   Position

Fig. 4

Fig. 5

20

21

40

30

32

31

33

16

10

15

12

13    14

22

11

1

18

19

Fig. 8

Non

Touche
PIA ?          301

Arrêt ?          302          Non

Rejoindre PIA          STOP

303          304

EP 1 497 702 B1

A1 : Ordre INIT

**101**
Mouvement 1
Arrêt sur butée
Enregistrement FC1

**102**
Mouvement 2
Enregistrement
CM = f($\theta$ )
ou
CM = f(t)

**103**
Arrêt sur butée
Enregistrement FC2

**104**
Calcul PLF, PIA à
partir de
CM = f($\theta$ )
ou
CM = f(t)

**105**
Enregistrement PIA

A2 : Ordre PIA

**106**
Mouvement vers PIA
Arrêt en PIA

**Fig. 6**

**Fig. 7**

**201**
CM($\theta$ ) = maxi pour $\theta$ = $\theta$ (i)

CM($\theta$ (k)) = Sup [CM($\theta$ (i))]

**202**
$\theta$ (k-1)
existe ?

Non          Oui

**203**
PLF = $\theta$ (k)

**204**
PLF = $\theta$ (k-1)

**205**
PIA = PLF – DELTA
ou
PIA = K x PLF (avec K<1)

**EP 1 497 702 B1**

## RÉFÉRENCES CITÉES DANS LA DESCRIPTION

**Documents brevets cités dans la description**

- EP 0426577 A
- EP 0574637 A
- FR 0203668
- EP 0007360 A